(19) Europäisches Patentamt
European Patent Office
Office européen des brevets

(11) **EP 2 191 306 B1**

(12) **FASCICULE DE BREVET EUROPEEN**

(45) Date de publication et mention
de la délivrance du brevet:
**29.07.2015 Bulletin 2015/31**

(21) Numéro de dépôt: **08804622.2**

(22) Date de dépôt: **23.09.2008**

(51) Int Cl.:
*G02B 5/18* *(2006.01)*        *H01S 3/00* *(2006.01)*

(86) Numéro de dépôt international:
**PCT/EP2008/062708**

(87) Numéro de publication internationale:
**WO 2009/040353 (02.04.2009 Gazette 2009/14)**

(54) **DISPOSITIF OPTIQUE DISPERSIF À CRISTAL PHOTONIQUE TRIDIMENSIONNEL**

DISPERSIVE OPTISCHE VORRICHTUNG MIT DREIDIMENSIONALEM PHOTONENKRISTALL

DISPERSIVE OPTICAL DEVICE WITH THREE DIMENSIONAL PHOTONIC CRYSTAL

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **25.09.2007 FR 0757815**

(43) Date de publication de la demande:
**02.06.2010 Bulletin 2010/22**

(73) Titulaires:
• **Commissariat à l'Énergie Atomique
et aux Énergies Alternatives
75015 Paris (FR)**
• **Centre National de la Recherche Scientifique
75016 Paris (FR)**

(72) Inventeurs:
• **NEAUPORT, Jérôme
F-33800 Bordeaux (FR)**
• **BONOD, Nicolas
F-83250 La Londe Les Maures (FR)**

(74) Mandataire: **Ilgart, Jean-Christophe
BREVALEX
95, rue d'Amsterdam
75378 Paris Cedex 8 (FR)**

(56) Documents cités:
EP-A- 1 780 563        WO-A-92/15903
WO-A-2006/089681        US-A- 5 907 436
US-A1- 2006 262 385

## Description

## DOMAINE TECHNIQUE

La présente invention concerne un dispositif optique dispersif composé notamment d'un réseau de diffraction par réflexion, utilisé en particulier pour la compression d'impulsion de faisceau laser.

## ÉTAT DE LA TECHNIQUE ANTÉRIEURE

Les réseaux de diffraction ont connu un grand développement depuis une vingtaine d'années, en relation notamment avec les lasers à impulsion brève, c'est-à-dire les lasers dont l'impulsion présente une durée de l'ordre de la picoseconde à la femtoseconde. Le laser PetaWatt, par exemple, délivre une impulsion de quelques kilojoules en quelques picosecondes, et présente ainsi une puissance de l'ordre de $10^{15}$ watt.

L'obtention de ce type d'impulsion présente un certain nombre de difficultés. Il n'est notamment pas possible d'amplifier directement une impulsion sans générer des effets non-linéaires qui détériorent les caractéristiques temporelles et spatiales du faisceau et peuvent endommager les matériaux amplificateurs. La méthode dite d'amplification à dérive de fréquences permet d'éviter cet inconvénient.

La méthode d'amplification à dérive de fréquences consiste dans un premier temps à étirer temporellement l'impulsion de manière à ce que la durée de l'impulsion soit augmentée et sa puissance diminuée. L'impulsion est ensuite amplifiée par propagation dans un matériau adéquat, comme par exemple un cristal de saphir dopé au titane ($Ti^{3+}:Al_2O_3$). Enfin, l'impulsion est comprimée temporellement de manière à retrouver sa durée initiale. Les systèmes étireur et compresseur utilisés sont habituellement des réseaux de diffraction en réflexion.

Le réseau de diffraction est un dispositif optique présentant un arrangement périodique de motifs sur une surface. Pour qu'il y ait diffraction, la longueur d'onde du faisceau incident doit être du même ordre de grandeur que la distance entre deux rayures, appelée pas du réseau. L'angle du faisceau diffracté $r_m$ dans l'ordre de diffraction $m$ est calculé à partir de l'angle du faisceau incident $i$, de la longueur d'onde du faisceau $\lambda$, du pas du réseau $a$. Les angles des faisceaux incident et diffracté sont mesurés par rapport à la normale $n$ à la surface du réseau de diffraction. La loi de diffraction des réseaux s'exprime par : $\sin r_m = \sin i + m\lambda/d$.

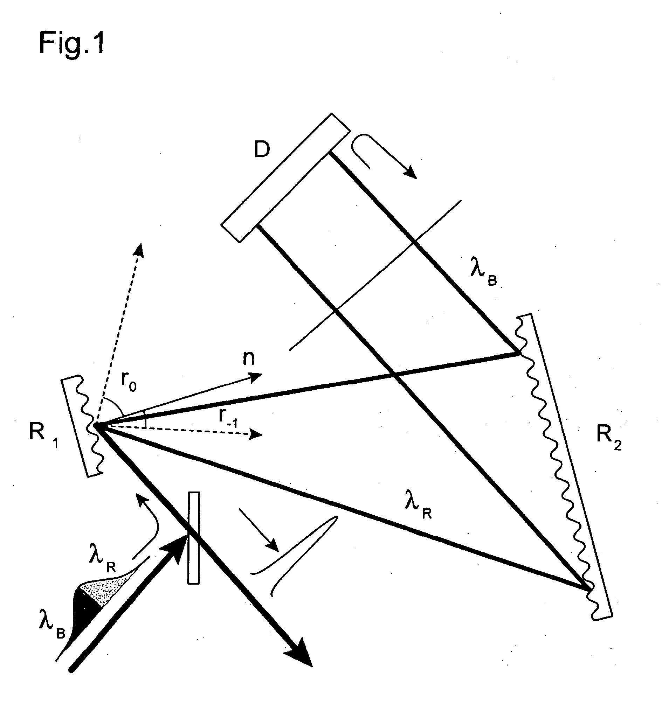

Le principe d'un système étireur ou compresseur repose sur une différence de marche des trajets optiques. La figure 1 montre le schéma d'un système compresseur. Le signal optique est réfléchi dans un premier temps par une lame semi-réfléchissante S puis diffracté par un réseau à dispersion négative $R_1$. La dispersion angulaire $D_a$ d'un réseau définit la dépendance de l'angle de réflexion $r_m$ en fonction de la longueur d'onde

$\lambda$ et s'exprime par la relation :

$$D_a = \frac{dr_m}{d\lambda} = \frac{m}{a \cos r_m}$$

Un système optique à dispersion négative impose aux hautes fréquences du signal, comme le montre la figure 1, de parcourir un chemin optique plus court que les basses fréquences. Les différents faisceaux monochromatiques obtenus par le premier réseau sont à nouveau réfléchis par un second réseau $R_2$ puis par un dièdre D avant de parcourir le chemin optique inverse. Ainsi, les grandes longueurs d'onde $\lambda_R$ ont parcouru un chemin optique plus long que les petites longueurs d'onde $\lambda_B$. Aussi l'impulsion sortante présente une durée plus courte. Le système compresseur est disposé de manière à ce que le faisceau retrouve la durée initiale qu'il présentait à l'entrée du système étireur.

La réflexion d'un faisceau incident d'impulsion brève doit se produire sans endommager les matériaux et en préservant les caractéristiques temporelles et spatiales du signal. La réflexion du faisceau peut être obtenue par différents moyens. L'application d'une couche métallique, comme l'aluminium, l'argent ou l'or, est souvent utilisée mais reste limitée aux impulsions de basse énergie. En effet, le métal présente un taux d'absorption non négligeable. L'énergie absorbée est alors dissipée sous forme de chaleur et peut endommager gravement les matériaux. La réflexion peut également être obtenue par réflexion totale interne. Celle-ci impose au faisceau, au-delà d'un certain angle incident, d'être totalement réfléchi. Cependant cela nécessite que le faisceau provienne du matériau le plus réfringent, qui ne pourra donc être l'air. Le faisceau doit dans ce cas arriver par un matériau solide. Or, lors de la propagation dans le matériau, le faisceau subit des effets non-linéaires qui dégradent les caractéristiques spatiales et temporelles de l'impulsion de façon inacceptable dans le régime des impulsions courtes. Il est donc nécessaire que le faisceau se propage dans l'air ou dans le vide vers le milieu réflecteur de plus haut indice de réfraction. Les milieux réflecteurs habituellement utilisés sont des diélectriques car ils présentent l'avantage d'avoir un seuil d'endommagement plus élevé que celui des métaux. A titre d'exemple, l'article de Perry et al. intitulé « High-efficiency multilayer dielectric diffraction gratings » et publié en 1995 dans Optics Letters, Vol.20 No.8 indique qu'une couche d'or (Au) sur un réseau présente un seuil de dommage expérimental de 1 J/cm2 pour une impulsion de longueur d'onde 1053 nm de durée de l'ordre de la nanoseconde et 0,4 J/cm2 pour une impulsion de durée inférieure à la picoseconde. Pour un faisceau de même longueur d'onde, un matériau diélectrique de verre de silice présente un seuil de dommage respectivement supérieur à 20 J/cm2 en régime nanoseconde et à 2 J/cm2 en régime subpicoseconde.

Le nombre total d'ordres diffractés propagatifs est déterminé par le pas du réseau *a*, pour une longueur d'onde et un angle incident fixés. L'ordre 0 correspond à la composante spéculaire non dispersive. L'ordre -1 est l'ordre dispersif recherché. Le nombre d'ordres propagatifs est donc limité à 2 et toute l'énergie incidente doit être recueillie dans l'ordre dispersif -1.

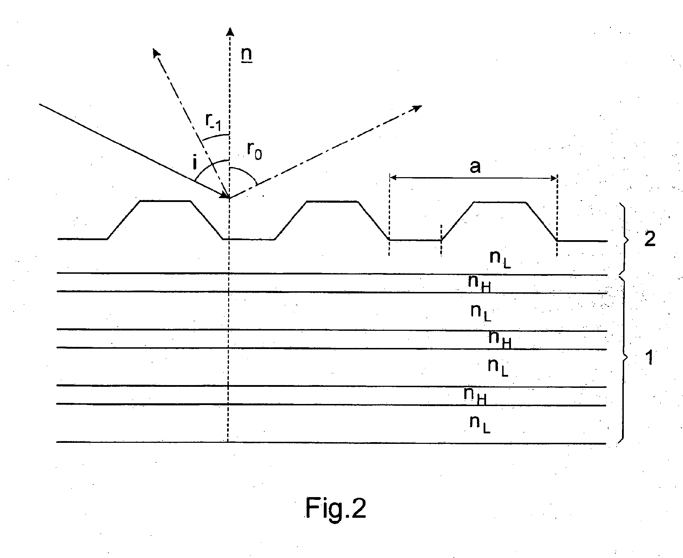

On connaît un dispositif optique comprenant un réseau de diffraction gravé sur un miroir diélectrique et déposé sur un substrat, divulgué par le brevet US 5907436. Le miroir diélectrique est une structure multicouche correspondant à l'empilement de deux matériaux diélectriques de bas $n_L$ et haut $n_H$ indices de réfraction, présenté dans la figure 2. Par exemple, ces matériaux peuvent être respectivement du $SiO_2$ et du $HfO_2$, ou encore du $SiO_2$ et du $Ta_2O_5$. Les épaisseurs optiques des différentes couches doivent être soit égales au quart de la longueur d'onde, soit optimisées de manière à garantir une réflectivité maximale du miroir à la longueur d'onde de l'impulsion. En polarisation TE, une vingtaine de couches est ainsi généralement nécessaire pour obtenir une réflexion proche de 100%. Enfin, le réseau de diffraction est gravé dans une couche mince de diélectrique. Ce dispositif optique présente une efficacité de diffraction en réflexion de l'ordre de 98% dans l'ordre -1, ainsi qu'un seuil d'endommagement plus élevé que celui des métaux, comme le montre l'article de Perry *et al.* précédemment cité.

Un miroir diélectrique est un cas particulier de cristal photonique. Les cristaux photoniques sont des matériaux présentant des bandes de fréquences pour lesquelles un faisceau de même fréquence ne peut se propager. Ainsi quel que soit l'angle du faisceau incident, le faisceau est réfléchi. Ces bandes interdites photoniques permettent d'obtenir une réflectivité maximale.

Cependant, un certain nombre de difficultés apparaissent lors de l'utilisation de ce type de dispositif optique. D'une part, un diélectrique multicouche nécessite l'utilisation de deux matériaux de propriétés mécaniques différentes et d'un grand nombre de couches nécessaire à la qualité de réflexion. La réalisation de l'empilement des couches est délicate puisqu'il faut éviter tout défaut d'épaisseur des différentes couches, défaut qui diminue l'efficacité réflective du miroir diélectrique. En effet, les interfaces entre les deux matériaux subissent des contraintes mécaniques, du fait des différences de propriétés physiques et mécaniques, qui les fragilisent. Ces contraintes conduisent à la déformation de la surface du réseau de diffraction, ce qui provoque une dégradation du profil spatial de l'impulsion. Les interfaces favorisent la formation de défauts locaux dans lequel le champ magnétique est fortement renforcé, ce qui est une source potentielle d'endommagement.

De plus, au vu de la puissance du faisceau à diffracter, il est essentiel de garantir un seuil élevé d'endommagement des matériaux.

Enfin, il est important de prévoir une méthode de fabrication du dispositif optique, qui soit aisée tout en garantissant des propriétés optiques optimales.

## EXPOSÉ DE L'INVENTION

La présente invention est définie par le dispositif optique de la revendication 1.

Avantageusement, ladite structure réfléchissante est un arrangement du type réseau cubique à faces centrées ou réseau hexagonal.

Dans un premier mode de réalisation, ladite structure réfléchissante est un arrangement tridimensionnel périodique de sphères.

Dans un second mode de réalisation, ladite structure réfléchissante est une matrice contenant un arrangement tridimensionnel périodique de trous sphériques.

Avantageusement, ledit réseau de diffraction et ladite structure réfléchissante sont en silice.

Alternativement, ledit réseau de diffraction et ladite structure réfléchissante sont en silicium.

## BRÈVE DESCRIPTION DES DESSINS

D'autres caractéristiques et avantages de l'invention apparaîtront à la lecture des figures jointes parmi lesquelles :

La figure 1 montre un schéma d'un système compresseur connu de l'état de la technique ;
La figure 2 décrit un exemple de réseau de diffraction disposé sur un milieu diélectrique multicouche selon l'état de la technique ;
La figure 3 représente un schéma de principe concernant le dispositif optique selon l'invention ;
La figure 4 illustre un mode de réalisation particulier de l'invention ;
La figure 5 illustre un second mode de réalisation particulier de l'invention.

## EXPOSÉ DÉTAILLÉ DE MODES DE RÉALISATION PARTICULIERS

Le principe de l'invention repose sur l'utilisation d'un réseau de diffraction en matériau diélectrique déposé sur un milieu réfléchissant constitué d'un cristal photonique tridimensionnel de même matériau diélectrique que le réseau de diffraction.

Selon la présente invention, l'utilisation d'un milieu réfléchissant constitué d'un matériau diélectrique unique permet de s'affranchir des problèmes de contraintes mécaniques localisées aux interfaces de matériaux différents.

Selon la présente invention, l'utilisation d'un même matériau diélectrique tant pour le réseau de diffraction que pour le cristal photonique permet d'obtenir un seuil élevé d'endommagement global du dispositif puisqu'il est composé d'un seul matériau. Il n'y a pas d'autre matériau utilisé qui viendrait diminuer le seuil d'endommagement global du dispositif optique.

Selon la présente invention, l'utilisation d'un cristal photonique tridimensionnel permet de s'affranchir des limitations inhérentes aux cristaux photoniques bidimensionnels concernant la fabrication du dispositif optique tout en présentant des propriétés optiques optimales du cristal. En effet, un cristal bidimensionnel, comme par exemple un empilement de cylindres, présente une direction privilégiée correspondant à l'axe des cylindres. Cet axe, appelé axe optique, induit un phénomène de biréfringence qui se traduit par le fait que l'indice de réfraction dépend de l'orientation relative de la polarisation du faisceau incident et de l'axe optique. Cela induit d'une part que les propriétés optiques du cristal, comme les largeurs de bandes, dépendent de l'orientation relative de la polarisation du faisceau incident et de l'axe optique du cristal. Cela induit d'autre part une difficulté de fabrication du cristal photonique du fait de la sensibilité des propriétés optiques du cristal aux défauts d'empilement. Tout défaut d'empilement qui perturbe l'axe optique du cristal provoque une dégradation des caractéristiques temporelles et spatiales du signal optique.

L'utilisation d'un cristal photonique tridimensionnel permet de s'affranchir totalement de toute orientation privilégiée vis-à-vis de la polarisation du faisceau incident dans le cas d'un arrangement cristallin cubique, voire de diminuer fortement l'influence de l'orientation relative de la polarisation du faisceau et de l'axe optique dans le cas des arrangements autres que cubique. De plus, la fabrication du cristal tridimensionnel est facilitée puisque les propriétés optiques du cristal sont moins sensibles à un défaut d'empilement que dans le cas d'un cristal bidimensionnel, par le fait même qu'un cristal tridimensionnel ne présente pas d'axe optique spécifique.

Il est à noter que le réseau de diffraction se distingue du cristal photonique tridimensionnel notamment par le fait qu'il présente une périodicité uniquement dans le plan de sa surface, alors que le cristal présente une périodicité en volume.

Par ailleurs, la période du réseau de diffraction peut être différente de ou sensiblement égale à celle du cristal photonique tridimensionnel.

Avantageusement, le matériau diélectrique utilisé pour le réseau de diffraction et le cristal tridimensionnel est de la silice. La silice présente un seuil d'endommagement élevé qui rend son utilisation particulièrement intéressante dans le cadre de l'amplification d'impulsions.

Le matériau diélectrique utilisé pour le réseau de diffraction et le cristal tridimensionnel peut également être du silicium. Le choix du matériau diélectrique permet de s'adapter au domaine de longueur d'onde recherché. Dans le domaine de longueur d'onde des lasers de puissance, le choix d'un matériau diélectrique à seuil d'endommagement élevé est particulièrement avantageux.

Par la suite, nous décrirons à titre d'exemples un cristal tridimensionnel comprenant dans un cas un arrangement de sphères de silice et dans un autre un arrangement de trous dans une matrice de silicium. Bien entendu, ces exemples ne sont pas limitatifs et les matériaux décrits peuvent être remplacés par tout autre matériau diélectrique.

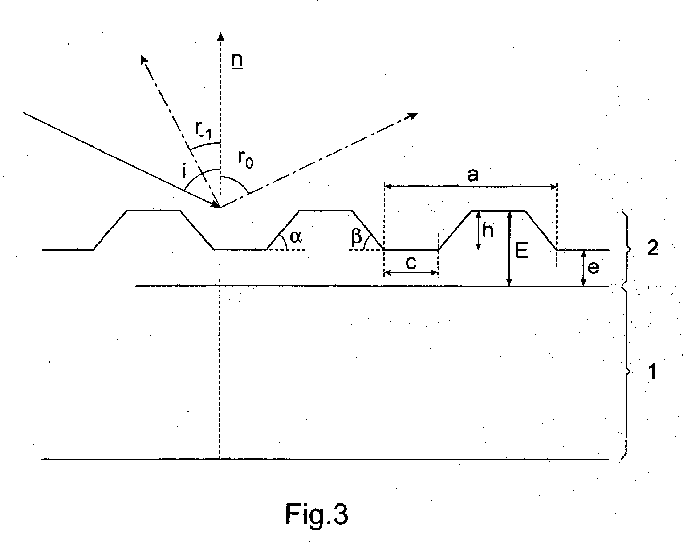

La figure 3 décrit un schéma du dispositif optique selon l'invention. Le dispositif comprend deux éléments, à savoir, d'une part, un cristal photonique tridimensionnel de silice 1, et d'autre part, un réseau de diffraction 2 disposé directement sur le cristal. Le cristal photonique tridimensionnel 1 comprend avantageusement un empilement périodique de sphères de silice ou une matrice de silicium comportant des trous sphériques d'air ou de gaz. L'arrangement de sphères ou de trous sphériques est celui d'un réseau de type cubique. Cet arrangement n'est pas limitatif et d'autres arrangements peuvent être envisagés comme le réseau hexagonal. La maille primitive du réseau du cristal photonique peut être une sphère et un trou sphérique, voire un autre motif apte à être empilé, par exemple un polyèdre. D'autre part, le dispositif selon l'invention comprend un réseau de diffraction 2 disposé directement sur le cristal photonique tridimensionnel 1. Le réseau de diffraction est réalisé par une couche diélectrique en silice d'épaisseur $E$, dans laquelle est gravée une succession périodique de rayures de période $a$ et d'épaisseur $h$. Différents motifs sont possibles, par exemple, sinusoïdaux, à échelles ou trapézoïdaux. Ce dernier motif est représenté dans la figure 3. L'épaisseur de la couche du diélectrique non gravée est notée $e = E - h$, la largeur des sillons est notée $c$ et la base des trapèzes ont des angles notés $\alpha$ et $\beta$ avec l'horizontale.

Sur ce dispositif est envoyé un faisceau optique de longueur d'onde $\lambda$ et d'angle incident $i$ par rapport à la normale $n$. Les angles sont par définition mesurés par rapport à la normale $n$. L'angle du faisceau diffracté dans l'ordre 0 est noté $r_0$ et correspond à la réflexion spéculaire $r_0 = -i$. L'angle du faisceau diffracté dans l'ordre -1 est noté $r_{-1}$.

Les paramètres dimensionnels du réseau tels que, par exemple, la profondeur du sillon, sa largeur, mais aussi l'amplitude et la période du réseau peuvent être optimisés de manière à garantir un taux maximal de diffraction dans l'ordre -1. Ainsi, il est connu que pour garantir une efficacité de diffraction importante et n'obtenir que les ordres 0 et -1 pour une longueur d'onde donnée $\lambda$ du faisceau incident, le pas du réseau $a$ doit vérifier la relation suivante :

$$2 < \frac{\lambda}{a} < \frac{2}{3}$$

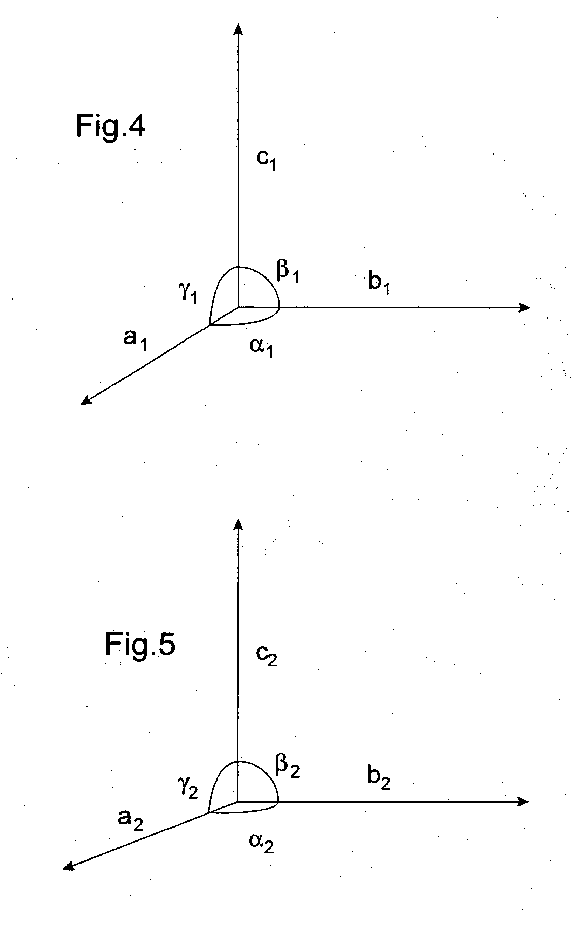

La figure 4 montre un mode d'arrangement cristallin du cristal photonique tridimensionnel selon l'invention, correspondant au mode cubique. La figure 4 représente plus particulièrement la maille primitive d'un réseau cubique où seuls les trois vecteurs de périodicité $a_1$, $b_1$ et $c_1$ sont représentés. Les angles entre ces trois axes sont notés $\alpha_1$, $\beta_1$ et $\gamma_1$. L'angle $\alpha_1$ est défini entre $a_1$ et

$b_1$; l'angle $\beta_1$ entre $b_1$ et $c_1$ et l'angle $\gamma_1$ entre $c_1$ et $a_1$. Par définition du réseau cubique, $a_1=b_1=c_1$ et $\alpha_1=\beta_1=\gamma_1=90°$. Les noeuds de cette maille primitive peuvent correspondre à une sphère ou un polyèdre de silice, ou un trou de forme sphérique ou polyédrique au sein d'une matrice de silicium. Ce mode d'arrangement selon l'invention correspond à la famille cristalline cubique et comprend donc notamment le réseau cubique centré et le réseau cubique à faces centrées.

La figure 5 montre un mode d'arrangement cristallin du cristal photonique tridimensionnel selon l'invention, correspondant au mode hexagonal. La figure 5 représente plus particulièrement la maille primitive d'un réseau hexagonal où seuls les trois vecteurs de périodicité $a_2$, $b_2$ et $c_2$ sont représentés. Les angles entre ces trois axes sont notés $\alpha_2$, $\beta_2$ et $\gamma_2$. L'angle $\alpha_2$ est défini entre $a_2$ et $b_2$ ; l'angle $\beta_2$ entre $b_2$ et $c_2$ et l'angle $\gamma_2$ entre $c_2$ et $a_2$. Par définition du réseau cubique, $a_2=b_2$, $\alpha_2=120°$ et $\beta_2=\gamma_2=90°$. Les noeuds de cette maille primitive peuvent correspondre à une sphère ou un polyèdre de silice, ou un trou de forme sphérique ou polyédrique au sein d'une matrice de silicium. Ce mode d'arrangement selon l'invention correspond à la famille cristalline hexagonale, elle comprend donc toute maille conventionnelle appartenant à cette famille.

La fabrication du dispositif optique selon l'invention comprend trois étapes. Tout d'abord, le cristal photonique tridimensionnel est fabriqué selon la méthode décrite dans le brevet US6858079 publié le 22 février 2005. Ce procédé diffère du procédé classique de cristallisation par sédimentation qui ne peut empêcher la présence de nombreux défauts d'empilement. Ce procédé permet ainsi de diviser par 20 le nombre de défauts d'empilement, d'après l'article de Vlasov et al. intitulé « On-chip natural assembly of silicon photonic bandgap crystals » et publié dans Nature le 14 novembre 2001. On utilise une suspension de sphères monodisperses de silice dans un solvant puis on plonge un substrat dans cette suspension perpendiculairement à la surface du liquide, de manière à former un ménisque capillaire. Par évaporation progressive du solvant, les sphères présentes dans le ménisque subissent une force capillaire qui les contraint à s'empiler selon un arrangement qui minimise l'énergie. Les arrangements cristallins obtenus sont des réseaux cubiques à faces centrées ou hexagonaux. Ces deux arrangements cristallins présentent une compacité parmi les plus élevées et minimisent ainsi les défauts d'empilement.

Les sphères monodisperses de silice sont obtenues en ajoutant du tétraéthoxysilane dans une solution d'éthanol, d'eau déionisée et d'hydroxyde d'ammonium aqueux. Le diamètre des sphères est contrôlé par la concentration de tétraéthoxysilane dans la solution.

Par ailleurs, pour obtenir un cristal inversé en silicium, c'est-à-dire une matrice composée d'un arrangement périodique de trous, on part d'un cristal positif obtenu comme exposé plus haut. Le cristal est ensuite rempli de silicium amorphe à l'aide d'un four à basse pression de dépôt en phase vapeur, ensuite solidifié pour obtenir une structure en poly-silicium. Les sphères de silice sont ensuite dissoutes par attaque chimique, par exemple avec un acide hydrofluorique aqueux. La silice est ainsi totalement dissoute et enlevée, ce qui permet l'obtention d'une matrice de silicium composée d'un arrangement périodique tridimensionnel de trous d'air sphériques.

Dans une seconde étape, on dépose une couche de silice d'épaisseur de quelques centaines de nanomètres par exemple grâce à un procédé sol-gel ou un procédé d'évaporation sous vide de silice.

On trouve par exemple une description du procédé sol-gel dans le brevet FR2693558 publié le 14 janvier 1994. Il consiste à utiliser un sol composé d'une suspension de silice colloïdale dans un solvant liquide. Le sol est déposé sur le cristal en utilisant un cylindre d'enduction placé sous la surface à traiter et animé d'un mouvement de translation à vitesse constante. Le ménisque de sol formé à la périphérie du cylindre par mouillage assure le dépôt de la couche mince à la surface du cristal. Enfin l'évaporation du solvant permet au sol placé sur la surface du cristal de former la couche mince voulue. Le contrôle de la vitesse permet de maîtriser l'épaisseur de la couche mince appliquée.

Le dépôt peut alternativement être effectué par un procédé d'évaporation sous vide de silice, de manière connue en soi.

Dans une troisième étape, le réseau de diffraction est gravé dans la couche déposée à la seconde étape. La gravure peut être effectuée selon des procédés connus d'holographie ou de décapage ionique, voire de gravure par diamant. On peut également utiliser un procédé de dépôt à travers un masque présentant les motifs périodiques voulus. Le réseau peut être créé à l'aide d'un masque présentant des ouvertures à la période voulue et placé sur la couche mince à graver. La silice est évaporée à travers des ouvertures du masque. Le masque est ensuite enlevé par les moyens chimique, physique ou par plasma, pour obtenir le réseau.

Un procédé par gravure chimique liquide combiné à un procédé holographique, tel que décrit par exemple dans le brevet US5907436, peut également être utilisé. On dépose sur la couche mince une couche de masque à gravure, puis une couche d'un matériau photosensible, comme un photorésist. Le motif périodique voulu est imprimé par procédé holographique sur le photorésist. Par moyens chimiques ou par plasma, le photorésist ainsi que les parties non protégées par le photorésist du masque à gravure sont enlevés. Puis par gravure chimique liquide, les parties de la couche à graver non protégées par le masque à gravure sont gravées. Enfin le masque est enlevé et la couche mince présente les motifs de périodicité voulus.

L'invention est présentée ici dans le cadre d'un système dispersif de compression de laser à impulsion brève. Il est connu de l'homme du métier qu'il peut être utilisé dans d'autres applications, notamment pour la spectroscopie ou encore le démultiplexage de fréquences, par exemple en télécommunications.

## Revendications

1. Dispositif optique, notamment pour la compression d'impulsion laser, comprenant un réseau de diffraction en réflexion à une longueur d'onde donnée, en matériau diélectrique disposé directement sur une structure réfléchissante à ladite longueur d'onde, **caractérisé en ce que** ladite structure réfléchissante est un cristal photonique tridimensionnel de même matériau diélectrique que ledit réseau de diffraction.

2. Dispositif optique selon la revendication 1, **caractérisé en ce que** ladite structure réfléchissante est un arrangement du type réseau cubique à faces centrées ou réseau hexagonal.

3. Dispositif optique selon l'une des revendications 1 à 2, **caractérisé en ce que** ladite structure réfléchissante est un arrangement tridimensionnel périodique de sphères.

4. Dispositif optique selon l'une des revendications 1 à 2, **caractérisé en ce que** ladite structure réfléchissante est une matrice contenant un arrangement tridimensionnel périodique de trous sphériques.

5. Dispositif optique selon l'une des revendications 1 à 4, **caractérisé en ce que** ledit réseau de diffraction et ladite structure réfléchissante sont en silice.

6. Dispositif optique selon l'une des revendications 1 à 4, **caractérisé en ce que** ledit réseau de diffraction et ladite structure réfléchissante sont en silicium.

## Patentansprüche

1. Optische Vorrichtung, insbesondere für die Laserpulskompression, umfassend ein Reflektionsbeugungsgitter für eine gegebene Wellenlänge aus einem dielektrischen Material, das direkt auf einer Struktur angeordnet ist, die bei der Wellenlänge reflektierend ist, **dadurch gekennzeichnet, dass** die reflektierende Struktur ein dreidimensionaler photonischer Kristall aus dem gleichen dielektrischen Material wie das Beugungsgitter ist.

2. Optische Vorrichtung nach Anspruch 1, **dadurch gekennzeichnet, dass** die reflektierende Struktur eine Anordnung vom Typ flächenzentriertes kubisches Gitter oder hexagonales Gitter ist.

3. Optische Vorrichtung nach einem der Ansprüche 1 bis 2, **dadurch gekennzeichnet, dass** die reflektierende Struktur eine periodische dreidimensionale Kugelanordnung ist.

4. Optische Vorrichtung nach einem der Ansprüche 1 bis 2, **dadurch gekennzeichnet, dass** die reflektierende Struktur eine Matrix ist, die eine periodische dreidimensionale Anordnung von kugelförmigen Löchern enthält.

5. Optische Vorrichtung nach einem der Ansprüche 1 bis 4, **dadurch gekennzeichnet, dass** das Beugungsgitter und die reflektierende Struktur aus Siliciumdioxid sind.

6. Optische Vorrichtung nach einem der Ansprüche 1 bis 4, **dadurch gekennzeichnet, dass** das Beugungsgitter und die reflektierende Struktur aus Silicium sind.

## Claims

1. An optical device, notably for laser pulse compression, comprising a reflection diffraction grating at a given wavelength in a dielectric material directly arranged on a reflective structure at said wavelength, **characterized in that** said reflective structure is a three-dimensional photonic crystal of the same dielectric material as said diffraction grating.

2. The optical device according to claim 1, **characterized in that** said reflective structure is an arrangement of the face-centered cubic lattice or hexagonal lattice type.

3. The optical device according to any of claims 1 to 2, **characterized in that** said reflective structure is a periodic three-dimensional arrangement of spheres.

4. The optical device according to any of claims 1 to 2, **characterized in that** said reflective structure is a matrix containing a periodic three-dimensional arrangement of spherical holes.

5. The optical device according to any of claims 1 to 4, **characterized in that** said diffraction grating and said reflective structure are in silica.

6. The optical device according to any of claims 1 to 4, **characterized in that** said diffraction grating and said reflective structure are in silicon.

Fig.1

Fig.2

Fig.3

Fig.4

$c_1$

$\beta_1$

$\gamma_1$

$b_1$

$a_1$

$\alpha_1$

Fig.5

$c_2$

$\beta_2$

$\gamma_2$

$b_2$

$a_2$

$\alpha_2$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5907436 A
- US 6858079 B
- FR 2693558

**Littérature non-brevet citée dans la description**

- **PERRY et al.** High-efficiency multilayer dielectric diffraction gratings. *Optics Letters,* 1995, vol. 20 (8
- **VLASOV et al.** On-chip natural assembly of silicon photonic bandgap crystals. *Nature,* 14 Novembre 2001